# EUROPEAN PATENT APPLICATION

(11) **EP 2 332 811 A1**
(43) Date of publication of application: **15.06.2011**
(21) Application number: 10194638.2
(22) Date of filing: 10.12.2010
(51) Int. Cl.: B62H 5/18, B62H 3/00, B62M 6/45

(54) **Bicycle**

(30) Priority: 10.12.2009 NL 2003942
(71) Applicant: Schimmelpennink, Laurens, Maria Hendricus, 1018 EJ Amsterdam (NL)
(72) Inventor: Schimmelpennink, Laurens, Maria Hendricus, 1018 EJ Amsterdam (NL)
(74) Representative: Uittenbogaart, Gustaaf Adolf

(57) **Abstract**

The invention relates to a bicycle comprising a frame (4), two wheels (5,16), a handlebar (2), peddles, a drive for a rear wheel, a bicycle support (10), wherein the bicycle support has a user position and a support position wherein said bicycle support prevents the use of the bicycle, a restraining device (12) for the bicycle support that prevents the movement of the bicycle support (10) from the support position to the user position, and a lock for unlocking the restraining device.
In accordance with the invention, when in the support position the bicycle support (10) prevents full rotation of the peddles and switches on the restraining device (12) automatically if the bicycle support is brought into the support position.

## Description

The invention relates to a bicycle according to the preamble of claim 1. Such a bicycle is known from FR 2852288, Edmond. The disadvantage of the known device is that the user, after placing the bicycle in storage, always needs to perform a conscious operation in order to lock the bicycle. This additional operation is often forgotten, thus enabling unauthorized persons to take the bicycle away.

In order to overcome this disadvantage, the bicycle is designed according to claim 1. In this manner, the use of the bicycle is automatically made impossible when the bicycle support is brought into the support position.

According to an embodiment, the bicycle is in accordance with claim 2. In this manner, the locking device can be switched on automatically.

According to an embodiment, the bicycle is in accordance with claim 3. In this manner it is possible for the user to easily place a heavy bicycle on the bicycle support.

According to an embodiment, the bicycle is in accordance with claim 4. In this manner, the bicycle becomes lighter and simpler.

According to an embodiment, the bicycle is in accordance with claim 5. In this manner, the operation of the locking device can be easily combined with an electronic control system.

According to an embodiment, the bicycle is in accordance with claim 6. In this manner, the lock is incorporated in the heart of the drive system of the bicycle and is not easily accessible for theft. In fact, any force applied in the act of theft will actually result in the disconnection of the power supply to the electric motor, thus rendering the bicycle unusable. This prevents the unauthorized use of the bicycle and prevents the lock from being deactivated.

According to an embodiment, the bicycle is in accordance with claim 7. In this manner, the bicycle support works as a lock since the bicycle support prevents the bicycle from being used.

According to an embodiment, the bicycle is in accordance with claim 8. In this manner, the bicycle support can be used to place the bicycle in a simple bicycle storage.

According to an embodiment, the bicycle is in accordance with claim 9. In this manner, the user switches on all locks on the bicycle by placing the bicycle in the support position in the bicycle support.

According to an embodiment, the bicycle is in accordance with claim 10. In this manner, it is known in the base station how the bicycle is being used and whether the bicycle is not in use and stored in a base station. This enables the recording of rentals.

According to an embodiment, the bicycle is in accordance with claim 11. In this manner, the generator can be easily incorporated in the frame. The high transmission ratio restricts the dimension of the generator.

The invention will now be described in more detail with reference to several exemplary embodiments by means of a drawing. In the drawing:
Fig. 1 shows a schematic side view of a bicycle placed in a bicycle storage.
Figure 2 shows a detail of figure 1 before the bicycle is placed in the storage,
Figure 3 shows a detail of figure 1 after the bicycle is placed in the storage, and
Figure 4 shows a schematic diagram of a control system of the bicycle according to figure 1.

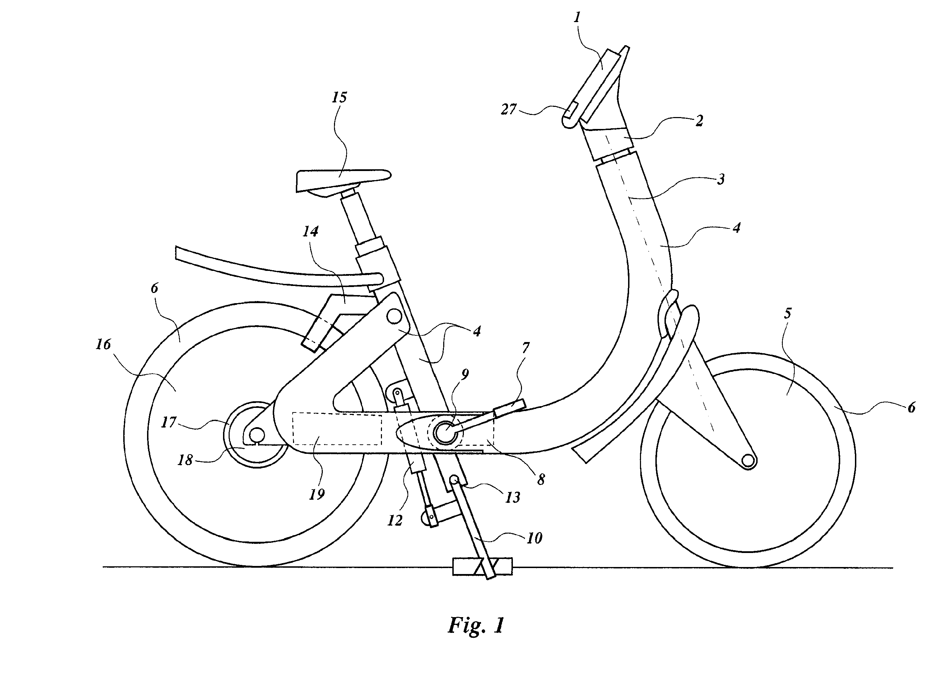

Figure 1 shows a bicycle with a frame 4, a rear wheel 16 with a tyre 6, a handlebar 2 with a steering axle 3 and a front wheel 5 with a tyre 6. The frame 4 has a crankshaft 9 around which can rotate a set of peddles 7. A saddle 15 is fitted onto the frame 4 and, in addition, there are the usual provisions such as mudguards and the like. The rear wheel 16 has a rear axle 18 with an electric motor 17 for driving the rear wheel 16. If necessary, a brake 14 is included for braking and/or preventing the rotation of the rear wheel 16 and/or front wheel 5. A battery 19 is incorporated into the frame 4 and also a generator set 8 that is driven by the peddles 7 by means of the crankshaft 9.

The generator set 8 has a right-angled transmission so that the rotational axis of the generator lies in the plane of the frame 4 and the generator can be inserted into the frame 4 and is thus protected. If necessary, the right-angled transmission also has an additional gearwheel transmission such as a planetary gear, so that there is a transmission ratio i in excess of 20 and preferably in excess of 30 between the crankshaft 9 and the generator. In this manner, the generator can be designed small so that it fits in a cavity in the frame 4.

A control panel 1 is mounted onto the handlebar 2, with a lock 27 incorporated therein, that can be operated with a key but preferably by means of a digitally readable card such as a chip card; it is also possible for the lock 27 to be operated by a keyboard for entering a code. The handlebar 4 is designed in such a manner that the various parts are firmly attached and that the cabling between the different components is not accessible from the outside, thus preventing damage or undesired use.

A bicycle support 10 is pivotally connected to the frame 4 by a support axle 13. The bicycle support 10 is designed in such a manner that it supports the frame 4 on both sides so that the bicycle can stand upright when placed in the bicycle support 10. In an embodiment, an actuator 12 can move the bicycle support 10 from a user position in which the bicycle is ready for use, towards a support position wherein the bicycle support lifts one of both wheels 15, 16 from the road if the bicycle support 10 stands on the road so as to prevent the use of the bicycle. Activating the actuator 12 and moving the bicycle support 10 to the support position prevents the use of the bicycle and thus locks the bicycle as it were.

In another embodiment, the generator set 8 is designed in such a manner that the generator can also be used as a motor. After the user of the bicycle has placed the bicycle support 10 on the ground, this motor is activated and the peddles 7 begin to rotate around the crankshaft 9. Because the bicycle support 10 is placed on the ground, the peddles 7 are obstructed by the bicycle support 10 and rotate the bicycle support 10 until it is placed in the support position and the motor stops. If the transmission in the generator set 8 is self-braking the peddles 7 are in a permanently restrained position and the bicycle support is locked in the support position.

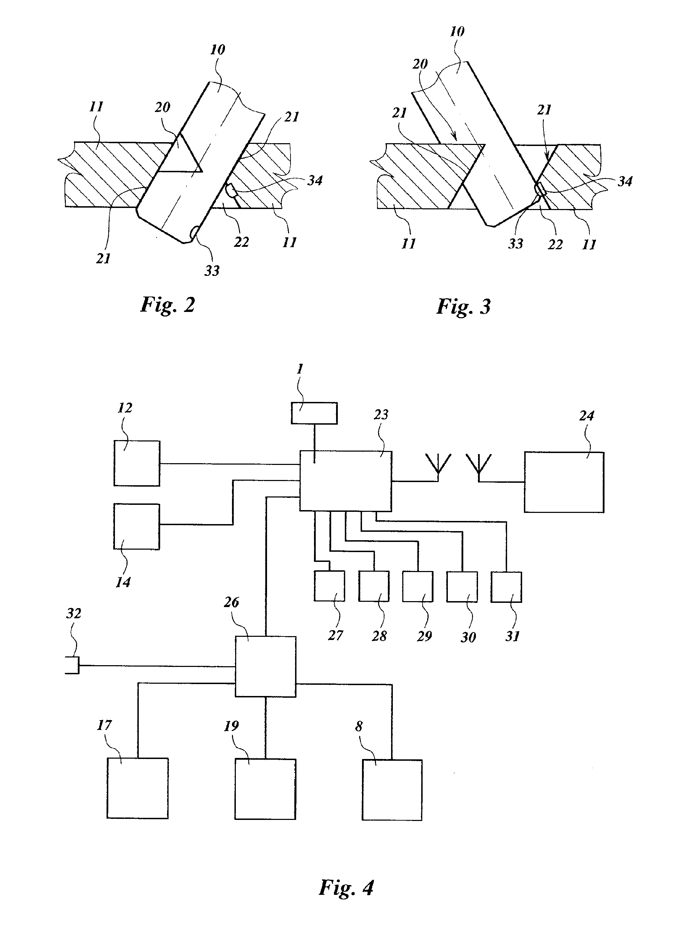

In another embodiment, the bicycle support 10 is moved by the user from the user position to the support position and this is detected by a position sensor 30 (see figure 4). The position sensor 30 transmits this signal to an operating system (see figure 4) which then activates the actuator 12 and restrains the bicycle support 10 in the support position so that the bicycle is locked as it were. After the bicycle support 10 is restrained in the support position the control unit can, at the same time, lock the bicycle, for example by switching on the electric motor 17 in such a manner that rotation of the rear wheel 16 is prevented or, if necessary, by activating the brake 14 so that the rotation of the rear wheel 16 is prevented. These restraints can be eliminated by the use of the lock 27.

In the aforementioned embodiment the bicycle support 10 is brought into the support position by an actuator and the actuator holds the bicycle support 10 in that position. In a more simple embodiment there is a spring-actuated locking device (not shown) that holds the bicycle support 10 in the support position. The bicycle support 10 can only be moved from this restrained support position if the spring-actuated locking device is released by means of an actuator (not shown).

The bicycle support 10 can also be used to place the bicycle in a storage, as is illustrated in figure 1. In the embodiment shown the bicycle support 10 is inserted into a storage plate 11 and held therein. This restraint can be achieved in various ways and in the exemplary embodiment shown, the storage plate 11 has no moving parts, but due to the shape of the bicycle support 10 and the storage plate 11 the bicycle support 10 is restrained in the support position in the storage plate 11 after being inserted into the storage plate 11.

Figures 2 and 3 illustrate how the bicycle support 10 can be inserted into a cylindrical opening 21 in the storage plate 11 and be restrained therein. The bicycle support 10 has a first recess 20 and the cylindrical opening 22 has a second recess 22, thus enabling the bicycle support 10 to be tilted towards the support position after inserting it into the storage plate 11. In the support position the storage plate 11 prevents the longitudinal movement of the bicycle support 10.

The bicycle support 10 is provided with a first contact point 33 and the storage plate with a second contact point 34. In the support position, the first contact point 33 and the second contact point 34 make contact with each other, thus enabling an electric current to flow to the battery 19. When contact is made, this can also signify to the control system 23 that the bicycle is placed in the storage.

Figure 4 shows the various parts of the bicycle according to the embodiment of figure 1 if the bicycle is used in a bicycle rental system. The bicycle has the operating system 23 that can be operated by a user by means of the control panel 1. The operating system has a wireless connection to a central control 24, wherein user data and the like are stored.

The operating system 23 is connected to the lock 27 which the user uses to notify the system that he is authorized to use the bicycle. The lock 27 can be a mechanical lock but can also be a card reader, for example, wherein a chip card identification is read and this identification is validated in the central system control 24, where the data concerning the rental and payment of the specific user are stored. The identification of the user enables the release of the bicycle for use and possibly also any restrictions regarding its use.

The control system 23 is also connected to a GPS system 28, the GPS system 28 determining the location of the bicycle and displaying this position on a map displayed on the control panel 1, so that the user knows where he is and where nearby storage places are located. The position determined by the GPS system 28 can also affect the authorized use of the bicycle , for example by restricting the maximum speed of the bicycle in or nearby pedestrian areas or restricting the use of the bicycle in such areas. The use of the bicycle can also be geographically restricted, for example, to a certain area or district in a town. The control system 23 is coupled to a speedometer 29 with which the speed of the bicycle can be recorded, so that this can also be restricted when desired.

It is also possible for the bicycle to be equipped with an acceleration sensor 31 that detects shocks of the bicycle, for example if the bicycle is treated roughly, collides with something or if the bicycle is ridden roughly over bumps, curb edges and the like. To prevent damage to the bicycle the speed of the bicycle can be restricted for some time if rough use has been detected or for longer periods in the event of repeated rough use. The drive system can also be turned off for short periods. This restricts and/or prevents rough use.

For the use of the bicycle, the control system 23 is coupled to a drive system 26. The drive system 26 detects the rotation of the generator and conducts the generated current to the battery 19 or the electric motor 17. Based on the resulting bicycle speed, the drive system 26 can determine what the cycling conditions are and, if necessary, supply additional power to the electric motor 17 to assist cycling in the event of headwinds and/or slopes. The opposite may also be the case, where power is stored in the battery 19. In order for the electric motor 17 to assist the user when riding up a slope, sufficient power will need to be stored in the battery 19. If the user experiences more assistance when cycling, he will find cycling more enjoyable. It is therefore necessary for the battery 19 to be able to store power. In the support position the first contact point 19 and the second contact point 22 make contact with each other, thus enabling an electric current to flow to the battery 19.

It will be apparent that the drive system 26 will only enable the use of the bicycle if the operating system 23 permits its use. As long as the bicycle is not released for use, the electric motor 17 will not be activated or will even remain constrained so that the bicycle is locked as it were. The rotation of the peddles does not change this. At the same time the electric motor 17 is activated and/or deactivated, the brake 14 is restrained and the bicycle support 10 is in the support position and may possibly be standing in the storage plate 11. In this manner, the use of the bicycle is restricted or prevented in three ways so as to prevent undesired use.

In addition to the previously described embodiment of a bicycle, wherein the peddles 7 are connected by means of an electrical system with the rear wheel 16, in a simple embodiment a mechanical connection is possible, for example with the use of a chain or other mechanical drive means. In such an embodiment the coupling between the peddles 7 and the rear wheel 16 can be interrupted so that the bicycle is rendered unusable. This can be achieved, for example, in the case of a chain drive by linking the rotation of the rear wheel with the rotation of the wheel with the use of a keyed joint, and by making this keyed joint switchable in a manner in which it can be locked or unlocked with a lock. Other embodiments are also conceivable.

## Claims

1. Bicycle comprising a frame (4), two wheels (5, 16), a handlebar (2), peddles, a drive for a rear wheel, a bicycle support (10), wherein the bicycle support has a user position and a support position wherein said bicycle support prevents the use of the bicycle, a restraining device (12) for the bicycle support that prevents the movement of the bicycle support from the support position to the user position, and a lock (27) for unlocking the locking device, **characterized in that** the bicycle support, when in the support position, prevents the full rotation of the peddles and activates the locking device automatically when the bicycle support is moved into the support position.

2. Bicycle according to claim 1, wherein the restraining device comprises a spring for activating the restraining device and a first actuator for releasing the restraining device.

3. Bicycle according to claim 1 or 2, wherein said bicycle comprises a second actuator for bringing the bicycle support (10) into the support position.

4. Bicycle according to claim 1, wherein the peddles (7) are coupled with a generator (8) and the generator can act as a motor to rotate both the peddles and the bicycle support (10) and thus be able to function as a second actuator.

5. Bicycle according to one of the preceding claims, wherein the lock (27) can be operated by a key, comprises a chip-card reader or a keyboard for entering codes.

6. Bicycle according to claim 1, wherein the bicycle comprises an electric motor (17) activated by a control system (23) and a wheel (16) that is driven exclusively by the electric motor such as a hub motor and the peddles (7) are coupled with a generator (8) by means of a right-angled transmission for supplying electric power to the electric motor and/or battery (19) and wherein the lock (27) can prevent the supply of power to the motor.

7. Bicycle according to any of the preceding claims, wherein the bicycle support (10) lifts one of the wheels (5, 16) from the ground in the support position.

8. Bicycle according to one of the preceding of the claims, wherein the bicycle support (10) is formed in such a manner that said bicycle support can be inserted into an opening (21) in a storage place and hook into place if the bicycle moves from the user position to the support position.

9. Bicycle according to claim 6, 7 or 8, wherein the bicycle support (10) has a sensor (30) that detects whether the bicycle support has been brought into the support position and/or is locked in the support position and wherein the control system (23), on detecting the support position, prevents the supply of power to the electric motor (17) and/or the electric motor switches in such a manner that the electric motor prevents the rotation of a wheel (16) or brakes and/or switches on an electrically operated brake (14) .

10. Bicycle according to one of the preceding claims, wherein the bicycle forms part of a rental system and has a wireless connection with a base station for the exchange of data relating to the use of the bicycle and/or the position of the bicycle support (10).

11. Bicycle according to one of the claims 6-10, wherein the generator (8) has a right-angled transmission with a transmission ratio of more than 1:20.
